# EUROPEAN PATENT SPECIFICATION

(11) **EP 2 338 708 B1**
(45) Date of publication and mention of the grant of the patent: **15.01.2014**
(21) Application number: 09425533.8
(22) Date of filing: 24.12.2009
(51) Int. Cl.: B60G 5/03

(54) **Tandem suspension system for a vehicle, with pivot integrated in the vehicle frame**
Doppelaufhängungssystem für eine Fahrzeug mit in den Fahrzeugrahmen integrierten Zapfen
Système de suspension en tandem pour véhicule avec pivot intégré dans le chassis du véhicule

(43) Date of publication of application: 29.06.2011
(73) Proprietor: Iveco S.p.A., 10156 Torino (IT)
(72) Inventor: Roccatello, Umberto, 25015 Desenzano (IT); Nalesso, Vitale, 39100 Bolzono (IT)
(74) Representative: Borsano, Corrado

(56) References cited:
- WO-A1-03/072377
- DE-A1- 4 309 004
- DE-B- 1 047 033
- DE-C- 434 162
- FR-A- 1 296 474
- US-A- 2 002 152

## Description

### Application field of the invention

The present invention relates to a tandem suspension system for a vehicle, with pivot integrated in the vehicle frame.

### Description of the prior art

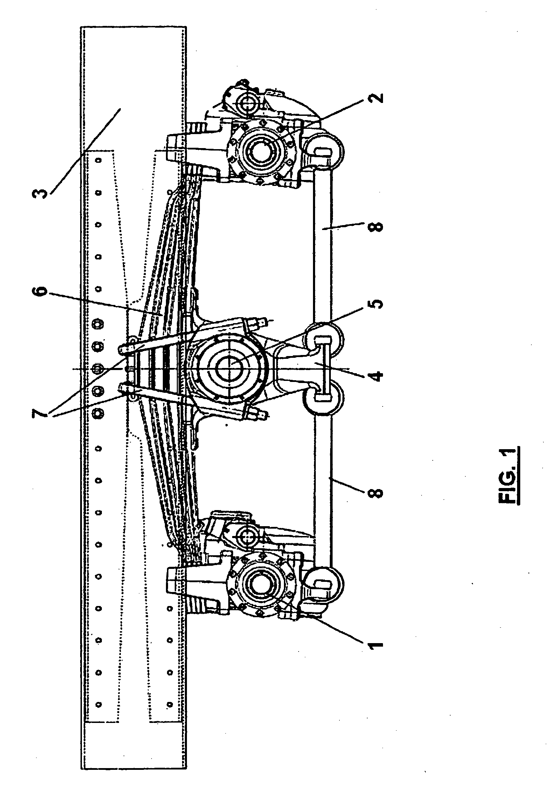

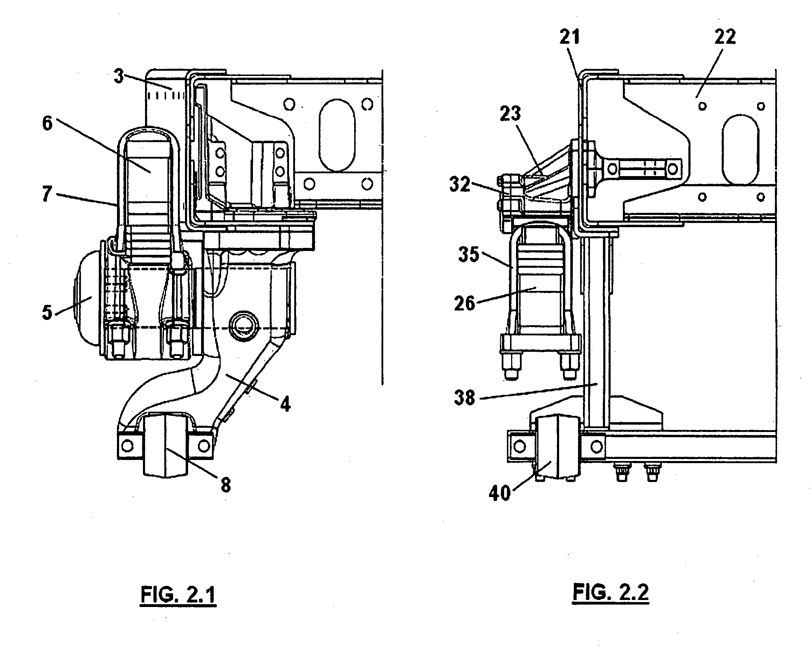

A tandem suspension system known in the art is shown for example in figures 1 and 2.1, respectively in a side and in a cross view. Other examples of known suspension system are disclosed in FR 1 296 474 and in DE 1047033.

With reference to the figures 1 and 2.1, the system allows the suspension of two axles 1, 2, possibly both being driving axles, and is connected to the side members 3 of the vehicle. According to the system, on each side of the vehicle there is a bearing structure 4 called "vertical elongated arm", projecting from the lower part of the side member, from which the pivot 5 of the suspension projects, in a position underneath the side member. A leaf spring package 6 is fixed on the pivot 5 by means of a pair of U bolts 7, so that it can oscillate around the pivot. The ends of the leaf spring package engage the vehicle axles, determining its suspension. A pair of reaction rods 8 are hinged to, and connect in an oscillating way, the axles of the vehicle 1, 2 to the lower end of the vertical elongated arm 4.

Thus the leaf spring packages are in a higher position, over the pivot, in order to limit the height of the frame from the ground, which should be kept as low as possible for improving vehicle stability and vehicle bodying. The oscillating structure of the tandem suspension (or equalizer suspension) rotates around the pivot fixed to the vertical elongated arm, from which it projects. The oscillating part is mounted on the projecting part of the pivot with respect to the vertical elongated arm that, in its turn, is fixed under the side member.

A series of drawbacks are present in a structure known of this type.

The structure is very heavy, because of both the vertical elongated arm bearing structure, which is made of cast iron, and the pivot, which needs to have a considerable diameter, since it is a projecting part. This determines an increase of the vehicle's weight to the detriment of its carrying capacity. The shape of the vertical elongated arm is not suitable for reacting to the longitudinal loads transmitted to the reaction rods.

Thus the vehicle is suspended from the U bolts, which as a matter of fact bear the weight of the whole vehicle by means of the leaf spring, generating a structural weak point.

### Summary of the invention

Therefore the aim of the present invention is to provide a tandem suspension with the pivot integrated in the frame of a vehicle, and vehicle comprising said suspension, suitable for overcoming all the drawbacks mentioned above.

The subject of the present invention is a tandem suspension for two vehicle axles, comprising at least a leaf spring for each side of the vehicle, said leaf spring being connected in its middle part to a support, while its ends are connected to said axles, characterized in that at each one of the sides of the vehicle said support is laterally and externally connected to a side member of the vehicle frame, said support being positionned only laterally to said side member in a position comprised between the lower part of the side of said side member and the upper part of the side of said side member when said member is in position in the vehicle and includes a pivot to which the leaf spring is connected centrally and the bottom, in a horizontally pivoted way, the pivot being placed at the side of the side member, leaning against both ends on the support.

The subject of the present invention is in particular to a tandem suspension with the pivot integrated in the frame of a vehicle, and vehicle comprising said suspension, as described more fully in the claims, which are an integral part of this description.

### Brief description of the Figures

Further purposes and advantages of the present invention will become clear from the following detailed description of a preferred embodiment (and relative alternative embodiments) and the drawings that are attached hereto, which are merely illustrative and non-limitative, in which:
figures 1 and 2.1, show a tandem suspension system of the type known in the art, respectively according to a side view and to a cross view;
figures 2.2 shows a tandem suspension system that is subject of the invention, according to a cross view;

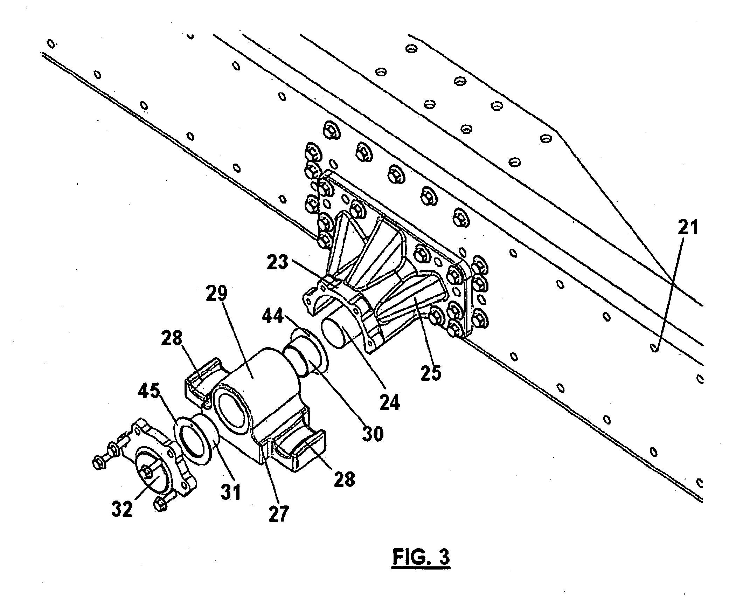

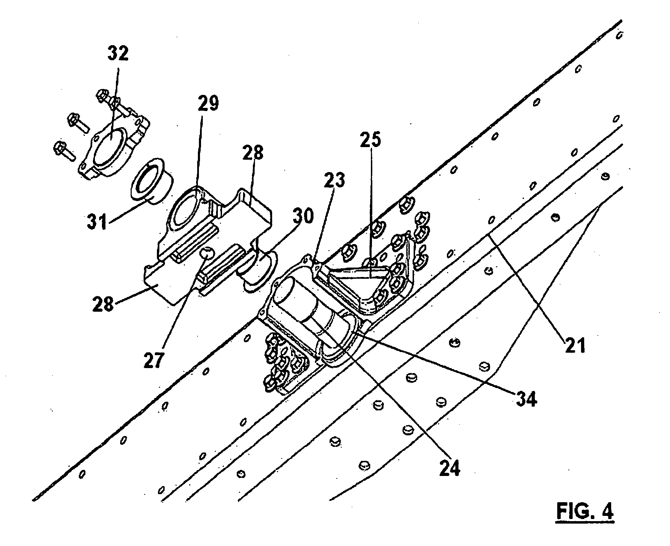

figures 3 and 4 show an exploded view of the parts of the system in fig. 2.2, according to respectively a top and a bottom view;

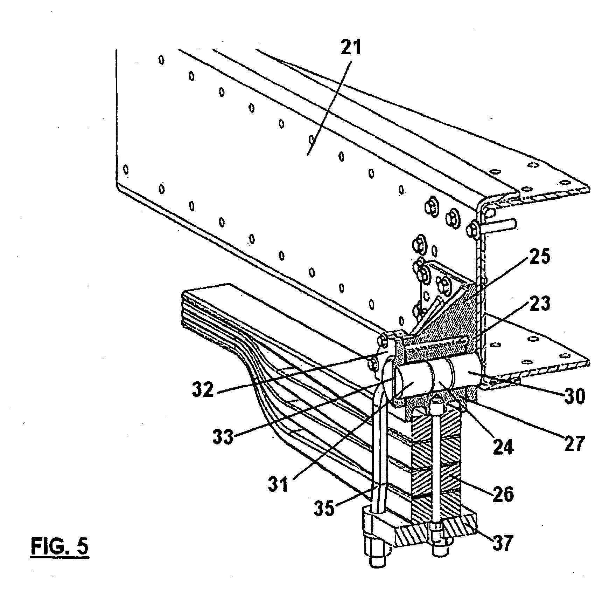

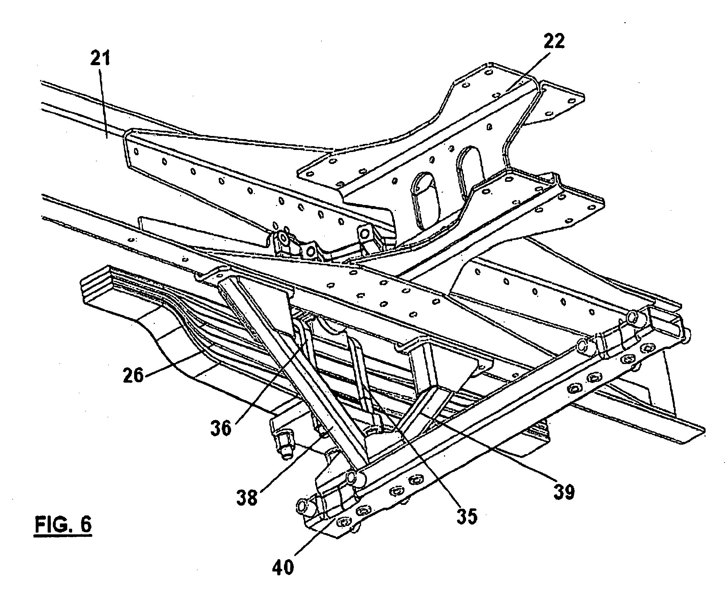

figures 5 and 6, show the system of figure 2.2, respectively according to a side view and to a cross section view and to a bottom view;
figures 7 and 8 show two application examples of the tandem suspension system according to the invention in case of respectively a leaf spring package of the parabolic type and of the semi-elliptical type.

In the drawings the same reference numbers and letters identify the same elements or components.

### Detailed description of preferred embodiments of the invention

Figures from 2.2 to 8 show examples of tandem suspensions according to the present invention.

In the figures a side member 21 is shown having a reinforcement cross member 22. On the lateral external part of the side member 21, a support 23, internally housing a pivot 24, is fixed by bolting. The support preferably comprises reinforcement elongated arms 25 and has a semi-cilindrical shape, open at the bottom. The support and the pivot are positioned laterally to the side member, within its width.

A leaf spring packet 26, comprising a series of stacked leaf springs, of any number, is fixed to the pivot 24, underneath both the pivot and the support 23, by means of an oscillating support 27. The lower shape of the latter is such as to adapt to the upper surface of the leaf spring packet, preferably flattened, with a pair of side wings 28 which extend by projecting with respect to the middle part 29 having a hollow cylinder shape, so that it can internally house the pivot. The side wings comprise an upper cavity.

A pair of bush bearings 30, 31, preferably of the sliding type, are driven into the ends of the pivot 24, and are placed between the pivot and the internal surface of the middle part 29 of the oscillating support. Preferably the bearings also have side shoulders 44, 45, in order to seal to the borders of the oscillating support.

A cap 32 externally covers the support, and comprises an internal cavity 33 where the external end of the pivot 24 is housed along with the bush bearing 31. The other internal end 34 of the pivot 24 is fixed into the support 23.

The leaf spring packet 26 is fixed to the horizontally pivoted support 27 by means of a pair of U bolts 35, 36 whose upper end is housed in the corresponding cavity of the wings 28. The U bolts 35, 36 are tighten to the leaf spring packet by a screwing on a plate 37 which closes the lower part of the leaf spring packet.

A support for the reaction rods is provided and consists of a pair of V-shaped tubulars 38, 39, connected to the lower part of the side member 21, in order to obtain a triangle, which closes on a lower support 40, suitable to house the oscillating pivots of the reaction rods 41, 42. The reaction rod support is independent and is separate from the suspension system. The other ends of the reaction rods 41, 42 are fixed to the axles 43, 44 of the vehicle, as well as the ends of the leaf spring package.

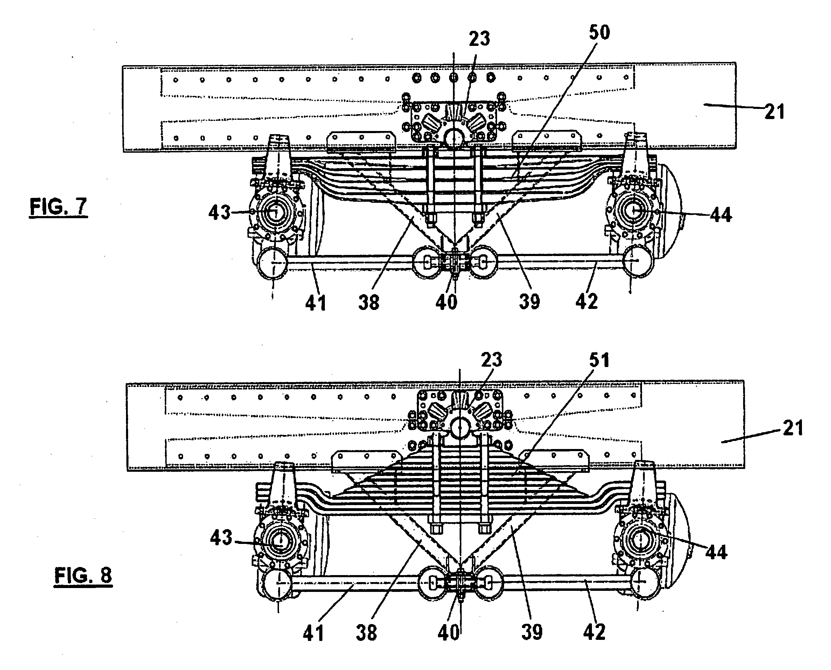

Figures 7 shows an example of the application of the tandem suspension system according to the invention to a leaf spring package of the parabolic type 50. In this case the support 23 is fixed in the lower part of the side member side 21. The lowered position of the support is possible since the parabolic leaves of the package may be shaped during the manufacturing in order to raise the ends, and also the package has a limited thickness. Thus it is possible to lift the connection points of the tandem axles to the ends, and to limit the height of the frame to the ground.

Figures 8 shows an example of the application of the tandem suspension system according to the invention to a leaf spring package of the semi-elliptical type 51. In this case the support 23 is fixed to the upper part of the side of the side member 21, in order compensate the higher thickness of the leaf spring package with respect to the previous case. Also in this case it is possible to shape the semi-elliptical leaves of the package during the manufacturing, in order to raise the connection points of the tandem axles to the ends and to limit the height of the frame to the ground.

In the system according to the invention, the pivot is simple and light, and it is not projecting, but it rests also on its front part, therefore behaving like a beam supported at both ends.

On the contrary, in the system known an internal end of the pivot is stuck to the vertical elongated arm and projects towards the outside. This means that the support projects from the side member, but the pivot does not.

In the system according to the invention, the bearings consist of bushes of the sliding type, made of self-lubricating, sintered, very hard materials, being less thick than the bearings used in the systems known (e.g. from 160mm to 55mm).

Actually it is not necessary to use rolling bearings, since the leaf spring package and the oscillating support only oscillate (e.g. ± 7°) around the pivot, thus avoiding to use the expensive rolling bearings. The invention, however, does not prevent the usage of rolling bearings.

The support of the reaction rods has a structure independent from the suspension, which is very light, for example made of tubular.

During the installation, the support of the pivot can be opened. The pivot is driven into the support from behind. The support may be made of cast iron and is external bench mounted, off line, before the installation on the frame, which reduces maintenance costs, because, in case an intervention is needed, it is enough to remove the cap and to the oscillating support off, which is integral with the leaf spring. Therefore, if it is necessary to dismantle the leaf spring, it is enough to intervene on the support.

The leaf spring rests under the pivot, thus the support with the pivot bears the vehicle's weight. The U bolts are used just for packing the leaf spring, their function is no longer to hold the whole vehicle. The advantage of increasing the safety and reducing the weight of the whole system is evident.

It will be apparent to the person skilled in the art that further alternative and equivalent embodiments of the invention can be conceived and reduced to practice without departing from the scope of the invention.

The advantages deriving from the use of this invention are evident.

The positioning of the pivot over the springs allows the U bolts to have just the function of tightening the spring to the oscillating support, but it has no longer the function to bear the weight of the whole vehicle load, as in the system of the type known in the art. Thus the U bolts may have a smaller diameter, being also more reliable.

The pivot integrated in the support uses a double support, while the pivot of the system known in the art, being a projecting part, uses a single support. This allows a considerable reduction of the dimensions of the pivot, with the same vehicle load.

Using sliding bearings allows a reduction of the dimensions, of the maintenance operations, along with a higher reliability.

The support of the pivot made of two parts can be easily assembled to the oscillating support, to which the sliding bearings have previously been added, by driving them into it. The support, along with the pivot and the oscillating support, is then assembled to the frame in its different positions, as a function of its usage with parabolic or with semi-elliptical springs. During the maintenance it is possible to replace the sliding bearings without dismantling the pivot support from the frame.

The support of the reaction rods, having just the function of fixing them, unlike the support of the system known in the art, which also has to support the pivot, may be realized by means of a simplified technology.

The reduction of the weight with respect to the tandem suspension of the type known in the art is considerable (e.g. about 50%), without using any special material. This also allows to increase the payload of the vehicle.

## Claims

1. Tandem suspension for vehicle with at least two axles, comprising at least a leaf spring for each side of the vehicle, said leaf spring being connected in its middle part to a support, while its ends are connected to said axles, **characterized in that** at each one of the sides of the vehicle said support (23) is laterally and externally connected to a side member (21) of the vehicle frame, said support (23) being positioned only laterally to said side member (21) in a position comprised between the lower part of the side of said side member (21) and the upper part of the side of said side member (21) when said member (21) is in position in the vehicle, and includes a pivot (24) to which the leaf spring is connected centrally and at the bottom, in a horizontally pivoted way, the pivot being placed at the side of the side member, leaning against both ends on the support.

2. Tandem suspension according to the claim 1, wherein the bottom of the support has an open shape and the leaf spring (26) is fixed to the pivot (24), underneath both the pivot and the support (23), by means of an oscillating support.

3. Tandem suspension according to claim 1, wherein the lower shape of said oscillating support (26) is such as to adapt to the upper surface of the leaf spring, and comprises a pair of side wings (28) which extend by projecting with respect to the middle part (29) having a hollow cylinder shape, so that it can internally house the pivot.

4. Tandem suspension according to claim 3, further comprising:
- at least a pair of bush bearings (30, 31) driven into the ends of the pivot (24), and placed between the pivot and the internal surface of the middle part (29) of the oscillating support;
- at least a cap (32) suitable for externally closing the support, the cap comprising a compartment for the external end of the pivot, with its respective bush bearing, the other internal end (34) of the pivot being driven into the support.

5. Tandem suspension according to claim 3, further comprising a pair of U bolts (35, 36) suitable to fix the leaf spring (26) to the oscillating support (27), the upper end of the U bolt being housed in said side wings (28).

6. Tandem suspension according to claim 1, wherein said leaf spring is a leaf spring package of the parabolic type (50) when said support (23) is fixed to the lower part of the side of the side member (21).

7. Tandem suspension according to claim 1, wherein said leaf spring is a leaf spring package of the semi-elliptical type (51) when said support (23) is fixed to the upper part of the side of the side member (21).

8. Vehicle comprising a tandem suspension according to any of the previous claims.

9. Vehicle according to claim 8, comprising a support for reaction rods connected to said two axles, said support being connected to the lower part of the side member (21), in an independent and separate way from said tandem suspension.

## Patentansprüche

1. Doppelaufhängung für ein Fahrzeug mit zumindest zwei Achsen, umfassend zumindest eine Blattfeder für jede Seite des Fahrzeugs, wobei die Blattfeder in ihrem mittleren Teil mit einer Abstützung verbunden ist, während ihre Enden mit den Achsen verbunden sind, **dadurch gekennzeichnet, dass** an einer jeden der Seiten des Fahrzeugs die Abstützung (23) lateral und außen mit einem Seitenelement (21) des Fahrzeugrahmens verbunden ist, wobei die Abstützung (23) nur lateral zu dem Seitenelement (21) in einer Position angeordnet ist, die zwischen dem unteren Teil der Seite des Seitenelements (21) und dem oberen Teil der Seite des Seitenelements (21) enthalten ist, wenn das Element (21) sich in Position in dem Fahrzeug befindet, und einen Drehzapfen (24) umfasst, mit welchem die Blattfeder zentral und an der Unterseite auf eine horizontal verschwenkte Weise verbunden ist, wobei der Drehzapfen an der Seite des Seitenelements platziert ist, wobei er gegen beide Enden an der Abstützung lehnt.

2. Doppelaufhängung nach Anspruch 1,
wobei die Unterseite der Abstützung eine offene Form aufweist und die Blattfeder (26) an dem Drehzapfen (24) unterhalb sowohl des Drehzapfens als auch der Abstützung (23) mittels einer oszillierenden Abstützung befestigt ist.

3. Doppelaufhängung nach Anspruch 1,
wobei die untere Form der oszillierenden Abstützung (26) derart ist, dass sie sich an die obere Oberfläche der Blattfeder anpasst, und ein Paar Seitenschenkel (28) umfasst, die sich derart erstrecken, dass sie mit Bezug auf den mittleren Teil (29), der eine Hohlzylinderform aufweist, so dass er in seinem Inneren den Drehzapfen beherbergen kann, vorstehen.

4. Doppelaufhängung nach Anspruch 3, ferner umfassend:
- zumindest ein Paar Buchsenlager (30, 31), die in die Enden des Drehzapfens (24) eingetrieben sind und zwischen dem Drehzapfen und der Innenfläche des mittleren Teils (29) der oszillierenden Abstützung platziert sind;
- zumindest eine Kappe (32), die geeignet ist, die Abstützung außen zu umschließen, wobei die Kappe einen Raum für das äußere Ende des Drehzapfens mit seinem jeweiligen Buchsenlager umfasst und das andere innere Ende (34) des Drehzapfens in die Abstützung getrieben ist.

5. Doppelaufhängung nach Anspruch 3,
die ferner ein Paar U-Bolzen (35, 36) umfasst, die zur Befestigung der Blattfeder (26) an der oszillierenden Abstützung (27) geeignet sind, wobei das obere Ende des U-Bolzens in den Seitenschenkeln (28) untergebracht ist.

6. Doppelaufhängung nach Anspruch 1,
wobei die Blattfeder ein Blattfederpaket vom parabolischen Typ (50) ist, wenn die Abstützung (23) an dem unteren Teil der Seite des Seitenelements (21) befestigt ist.

7. Doppelaufhängung nach Anspruch 1,
wobei die Blattfeder ein Blattfederpaket vom halbelliptischen Typ (51) ist, wenn die Abstützung (23) an dem oberen Teil der Seite des Seitenelements (21) befestigt ist.

8. Fahrzeug mit einer Doppelaufhängung nach einem der vorhergehenden Ansprüche.

9. Fahrzeug nach Anspruch 8,
das eine Abstützung für Reaktionsstäbe umfasst, die mit den zwei Achsen verbunden sind, wobei die Abstützung mit dem unteren Teil des Seitenelements (21) auf eine unabhängige und getrennte Weise von der Doppelaufhängung verbunden ist.

## Revendications

1. Suspension en tandem pour un véhicule comportant au moins deux essieux, comprenant au moins un ressort à lames pour chaque côté du véhicule, ledit ressort à lames étant raccordé dans sa partie de milieu à un support, alors que ses extrémités sont raccordées auxdits essieux, **caractérisée en ce que** à chacun des côtés du véhicule, ledit support (23) est latéralement et extérieurement raccordé à un organe latéral (21) de la caisse de véhicule, ledit support (23) étant positionné uniquement latéralement audit organe latéral (21) dans une position comprise entre la partie inférieure du côté dudit organe latéral (21) et la partie supérieure du côté dudit organe latéral (21) lorsque ledit organe (21) est en position dans le véhicule, et inclut un pivot (24) auquel le ressort à lames est raccordé centralement et au fond, de manière horizontalement pivotée, le pivot étant placé au niveau du côté de l'organe latéral, reposant contre les deux extrémités sur le support.

2. Suspension en tandem selon la revendication 1, dans laquelle le fond du support a une forme ouverte et le ressort à lames (26) est fixé au pivot (24), en dessous à la fois du pivot et du support (23), au moyen d'un support oscillant.

3. Suspension en tandem selon la revendication 1, dans laquelle la forme inférieure dudit support oscillant (26) est telle à s'adapter à la surface supérieure du ressort à lames, et comprend une paire d'ailes latérales (28) qui s'étendent en faisant saillie par rapport à la partie milieu (29) ayant une forme de cylindre creux, de sorte qu'elle puisse loger intérieurement le pivot.

4. Suspension en tandem selon la revendication 3, comprenant en outre :
- au moins une paire de paliers lisses (30, 31) entraînés dans les extrémités du pivot (24), et placés entre le pivot et la surface interne de la partie milieu (29) du support oscillant ;
- au moins une coiffe (32) convenant pour fermer extérieurement le support, la coiffe comprenant un compartiment pour l'extrémité externe du pivot, avec son palier lisse respectif, l'autre extrémité interne (34) du pivot étant entraînée dans le support.

5. Suspension en tandem selon la revendication 3, comprenant en outre une paire de boulons en U (35 ; 36) convenant à une fixation du ressort à lames (26) au support oscillant (27), l'extrémité supérieure du boulon en U étant logée dans lesdites ailes latérales (28).

6. Suspension en tandem selon la revendication 1, dans laquelle ledit ressort à lames est une enveloppe de ressort à lames du type parabolique (50) lorsque ledit support (23) est fixé à la partie inférieure du côté de l'organe latéral (21).

7. Suspension en tandem selon la revendication 1, dans laquelle ledit ressort à lames est une enveloppe de ressort à lames du type semi-elliptique (51) lorsque ledit support (23) est fixé à la partie supérieure du côté de l'organe latéral (21).

8. Véhicule comprenant une suspension en tandem selon l'une quelconque des revendications précédentes.

9. Véhicule selon la revendication 8, comprenant un support pour des jambes de réaction raccordées auxdits deux essieux, ledit support étant raccordé à la partie inférieure de l'organe latéral (21), de manière indépendante et séparée de ladite suspension en tandem.
